(19) Europäisches Patentamt

European Patent Office

Office européen des brevets

(11) **EP 4 354 861 A1**

(12) # EUROPEAN PATENT APPLICATION
published in accordance with Art. 153(4) EPC

(43) Date of publication:
**17.04.2024 Bulletin 2024/16**

(21) Application number: **21944649.9**

(22) Date of filing: **11.06.2021**

(51) International Patent Classification (IPC):
**H04N 19/126** (2014.01)    **H04N 19/13** (2014.01)
**H04N 19/176** (2014.01)

(52) Cooperative Patent Classification (CPC):
**H04N 19/126; H04N 19/13; H04N 19/176**

(86) International application number:
**PCT/CN2021/099854**

(87) International publication number:
**WO 2022/257142 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **DAI, Zhenyu
Dongguan, Guangdong 523860 (CN)**

(74) Representative: **Taor, Simon Edward William et al
Venner Shipley LLP
200 Aldersgate
London EC1A 4HD (GB)**

(54) **VIDEO DECODING AND CODING METHOD, DEVICE AND STORAGE MEDIUM**

(57)    The present disclosure provides a video decoding method, comprising: determining an inverse quantization mode of a block to be decoded; and performing coefficient analysis and inverse quantization on the block to be decoded according to the determined inverse quantization mode. The present disclosure further provides a video coding method, comprising: determining a quantization mode of a block to be encoded; and quantizing the block to be encoded according to the determined quantization mode. The present disclosure introduces a quantization mode/inverse quantization mode at transform block or sub-transform block levels, is capable of using different quantization/inverse quantization modes with respect to different transform blocks or sub-transform blocks in a code stream, and can improve the coding and decoding efficiency. The present disclosure further provides a device using the coding and decoding method described above, and a storage medium.

```
┌─────────────────────────────────────┐
│ 801, determining an inverse quantization │
│    mode of a to-be-decoded block     │
└─────────────────────────────────────┘
                  │
                  ▼
┌─────────────────────────────────────┐
│ 802, performing coefficient parsing and │
│ inverse quantization on the to-be-decoded │
│ block according to the determined inverse │
│         quantization mode            │
└─────────────────────────────────────┘
```

**FIG. 8**

EP 4 354 861 A1

**Description**

TECHNICAL FIELD

Embodiments of the disclosure relate to, but are not limited to the technical field of video data processing, and in particular to a video decoding method and device, a video encoding method and device, and a storage medium.

BACKGROUND

A digital video compression technology mainly compresses huge digital image and video data to facilitate transmission, storage, etc. With the proliferation of Internet videos and people's increasing requirements on video definitions, although existing digital video compression standards may save a lot of video data, it still needs to pursue better digital video compression technologies at present, to reduce bandwidth and traffic pressures of digital video transmission to achieve more efficient video encoding, decoding, transmission and storage.

SUMMARY

A summary of subject matters described in detail in the disclosure is as follows. The summary is not intended to limit the scope of protection of the claims.

An embodiment of the disclosure provides a video decoding method, the video decoding method includes the following operations.

An inverse quantization mode of a to-be-decoded block is determined.

Coefficient parsing and inverse quantization are performed on the to-be-decoded block according to the determined inverse quantization mode.

An embodiment of the disclosure further provides a video encoding method, the video encoding method includes the following operations.

A quantization mode of a to-be-encoded block is determined.

Quantization is performed on the to-be-encoded block according to the determined quantization mode.

In an embodiment of the disclosure, the encoding method may further include the following operations. A quantization mode flag indicating the quantization mode of the to-be-encoded block is written into an encoded bitstream.

An embodiment of the disclosure further provides a video decoding device, the video decoding device includes a processor, and a memory storing a computer program executable by the processor. The processor implements the decoding method of any one of the embodiments of the disclosure when the processor executes the computer program.

An embodiment of the disclosure further provides a video encoding device, the video encoding device includes a processor, and a memory storing a computer program executable by the processor. The processor implements the encoding method of any one of the embodiments of the disclosure when the processor executes the computer program.

An embodiment of the disclosure further provides a non-transitory computer-readable storage medium, and the computer-readable storage medium stores a computer program. The computer program implements the video decoding method or the video encoding method of any one of the embodiments of the disclosure when the computer program is executed by a processor.

An embodiment of the disclosure further provides a video encoding and decoding system, the video encoding and decoding system includes the decoding device of any one of the embodiments of the disclosure and/or the encoding device of any one of the embodiments of the disclosure.

An embodiment of the disclosure further provides a bitstream, the bitstream is generated according to the encoding method of any one of the embodiments of the disclosure. The bitstream includes a quantization mode flag configured to indicate a mode by which a decoding side performs inverse quantization on a to-be-decoded block.

Other aspects may be apparent after reading and understanding the drawings and detailed descriptions.

BRIEF DESCRIPTION OF THE DRAWINGS

The drawings are intended to provide understanding of the embodiments of the disclosure, constitute a part of the specification, explain technical solutions of the disclosure together with the embodiments of the disclosure, and do not constitute limitations to the technical solutions of the disclosure.

FIG. 1 is a structural block diagram of a video encoding and decoding system applicable to an embodiment of the disclosure.

FIG. 2 is a structural block diagram of a video encoder applicable to an embodiment of the disclosure.

FIG. 3 is a structural block diagram of a video decoder applicable to an embodiment of the disclosure.

FIG. 4 is a schematic diagram of a dependent quantizer applicable to an embodiment of the disclosure.

FIG. 5 is a schematic diagram of state transition of a quantizer used to determine transform coefficients and applicable to an embodiment of the disclosure.

FIG. 6 is a schematic diagram of a mesh structure representing dependence between states and quantization coefficients (coding order is from left to right) and applicable to an embodiment of the disclosure.

FIG. 7 is a schematic diagram of four candidate quantization coefficients (ABCD) applicable to an embodiment of the disclosure.

FIG. 8 is a flowchart of a video decoding method according to an embodiment of the disclosure.

FIG. 9 is a flowchart of a video decoding method according to another embodiment of the disclosure.

FIG. 10 is a flowchart of a video encoding method according to an embodiment of the disclosure.

FIG. 11 is a flowchart of a video encoding method according to another embodiment of the disclosure.

FIG. 12 is a structural block diagram of a video encoding device or video decoding device according to an embodiment of the disclosure.

## DETAILED DESCRIPTION

The disclosure describes multiple embodiments, however, descriptions are exemplary rather than restrictive, and it is obvious to those of ordinary skill in the art that there may be more embodiments and implementations within the scope of the embodiments described in the disclosure.

In the disclosure, words "exemplary", "such as" or the like are intended to represent an example, illustration or explanation. Any embodiment described as "exemplary" or "such as" in the disclosure should not be construed as being preferred or advantageous over other embodiments.

When representative exemplary embodiments are described, the description may have presented a method and/or process as a specific sequence of steps. However, to the extent that the method or process is not dependent on the specific sequence of steps described here, the method or process should not be limited to the specific sequence of steps. As understood by those of ordinary skill in the art, other sequences of steps are possible. Therefore, the specific sequence of steps set forth in the description should not be construed as limitations of the claims. Furthermore, claims directed to the method and/or process should not be limited to performing steps thereof in written sequences, it may be easily understood by those skilled in the art that these sequences may be changed and still remain within the spirit and scope of the embodiments of the disclosure.

Internationally, mainstream video encoding and decoding standards include H.264/Advanced Video Coding (AVC), H.265/High Efficiency Video Coding (HEVC), H.266/Versatile Video Coding (WC), Moving Picture Experts Group (MPEG), Alliance for Open Media (AOM), Audio Video coding Standard (AVS) and expansions of these standards, or any other customized standards, etc. These standards reduce amount of transmitted data and amount of stored data through video compression technologies, to achieve more efficient video coding, decoding, transmission and storage.

In H.264/AVC, an input image is divided into fixed-size blocks to be used as basic units for coding, the block is referred to as a Macro Block (MB) and includes one luma block and two chroma blocks, and size of the luma block is $16 \times 16$. When 4:2:0 sampling is used, size of the chroma block is half the size of the luma block. In a prediction process, MB is further divided into small blocks for prediction, according to different prediction modes. In intra prediction, MB may be divided into small blocks of $16 \times 16$, $8 \times 8$ and $4 \times 4$, and intra prediction is performed on each small block respectively. In a transform and quantization process, MB is divided into small blocks of $4 \times 4$ or $8 \times 8$, and transform and quantization are performed on a prediction residual in each small block respectively, to obtain quantized coefficients.

Compared to H.264/AVC, H.265/HEVC has taken improvement measures in multiple coding processes. In H.265/HEVC, an image is divided into Coding Tree Units (CTUs), CTU is a basic units for coding (corresponding to MB in H.264/AVC). A CTU includes one luma Coding Tree Block (CTB) and two chroma CTBs. A maximum size of a Coding Unit (CU) in the H.265/HEVC standard is usually $64 \times 64$. In order to adapt to a variety of video contents and characteristics, the CTU is iteratively divided into a series of CUs by way of Quadro Tree (QT), and CU is a basic unit for intra/inter coding. One CU includes one luma Coding Block (CB), two chroma CBs and relevant syntax structures, a maximum size of the CU is CTU, and a minimum size of the CU is 8×8. A leaf sub-node CU obtained by coding tree division may be divided into three types according to different prediction modes: an intra CU for intra prediction, an inter CU for inter prediction, and a skipped CU. The skipped CU may be considered as a special case of the inter CU, and does not contain motion information and prediction residual information. The leaf sub-node CU contains one or more Prediction Units (PUs). H.265/HEVC supports PUs with sizes from 4×4 to 64×64, a total of eight division modes are present. For an intra coding mode, there are two possible division modes: Part_2Nx2N and Part_NxN. For a prediction residual signal, CU is divided into Transform Units (TUs) by a prediction residual QT. A TU includes a luma Transform Block (TB) and two chroma TBs. Only square division is allowed, one CB is divided into 1 or 4 PBs. The same TU has the same transform and quantization process, and supports sizes from 4×4 to 32×32. Unlike previous coding standards, in inter prediction, TBs may cross boundaries of PB to further maximize coding efficiency of inter coding.

In H.266/VVC, a video coded image is firstly divided into CTUs similar to H.265/HEVC, however, a maximum size of CTU is increased from 64×64 to 128×128. H.266/VVC proposes QT and nested Multi-Type Tree (MTT) division. MTT includes a Binary Tree (BT) and a Ternary Tree (TT), unifies concepts of CU, PU and TU in H.265/HEVC, and supports more flexible CU division shapes. CTU is divided according to a QT structure, and a leaf sub-node is further divided through MTT. A MTT leaf sub-node becomes a CU, and when the CU is not greater than a maximum TU (64×64), subsequent prediction and transform will not be further divided. In most cases, CU, PU and TU have the same size. In H.266/VVC, considering different characteristics of luma and chroma and parallelism of specific implementations, the chroma may use a separate division tree structure and is unnecessary to be consistent with the luma division tree. In H.266/VVC, chroma division of I frame uses a chroma separation tree, and chroma division of each of P frame and B frame is consistent with the luma division.

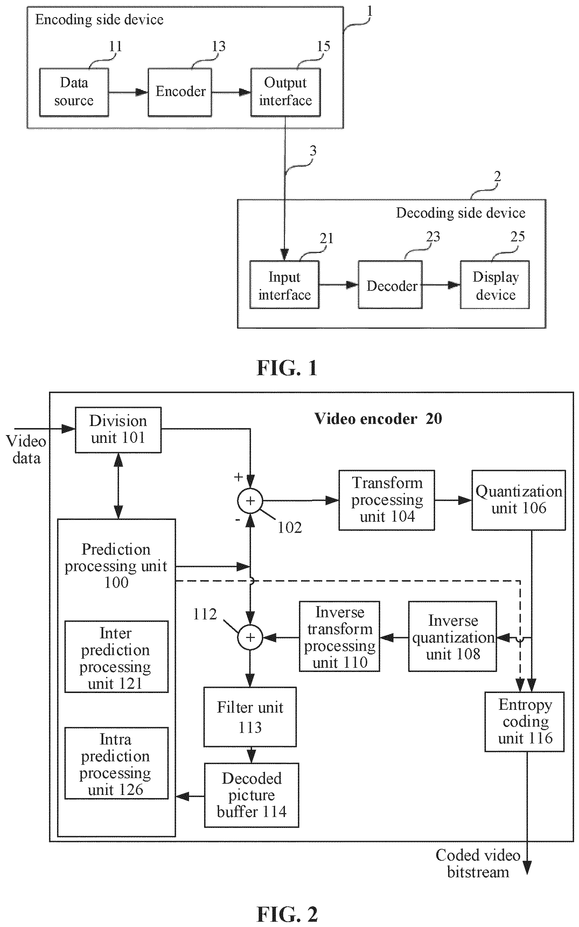

FIG. 1 is a structural block diagram of a video encoding and decoding system applicable to an embodiment of the disclosure. As illustrated in FIG. 1, the system is divided into an encoding side device 1 and a decoding side device 2. The encoding side encoding side device 1 encodes a video image to generate a bitstream. The decoding side device 2 may decode the bitstream to obtain a reconstructed video image. Each of the encoding side encoding side device 1 and the decoding side device 2 may include one or more processors and a memory coupled to the one or more processors, such as a Random Access Memory (RAM), an Electrically Erasable Programmable Read-Only Memory (EEPROM), a flash memory, or other media. Each of the encoding side encoding side device 1 and the decoding side device 2 may be implemented by various devices, such as a desktop computer, a mobile computing device, a laptop computer, a tablet computer, a set-top box, a television, a camera, a display device, a digital media player, a vehicle-mounted computer, or other similar devices.

The decoding side device 2 may receive the bitstream from the encoding side encoding side device 1 via a link 3. The link 3 includes one or more media or devices capable of moving the bitstream from the encoding side encoding side device 1 to the decoding side device 2. In an example, the link 3 includes one or more communication media allowing the encoding side encoding side device 1 to directly send the bitstream to the decoding side device 2. The encoding side encoding side device 1 may modulate the bitstream according to a communication standard (such as a wireless communication protocol), and may send the modulated bitstream to the decoding side device 2. The one or more communication media may include wireless and/or wired communication media, such as a radio frequency (RF) spectrum or one or more physical transmission lines. The one or more communication media may form a part of a packet-based network, such as a local area network, a wide area network, or a global network (such as Internet). The one or more communication media may include routers, switches, base stations, or other devices facilitating communication from the encoding side encoding side device 1 to the decoding side device 2. In another example, the bitstream may also be output from an output interface 15 to a storage device, and the decoding side device 2 may read stored data from the storage device via streaming or downloading. The storage device may include any one of a variety of distributed-access or local-access data storage media, such as a hard drive, a Blu-ray disc, a digital versatile disk (DVD), a Compact Disk Read-Only Memory (CD-ROM), a flash memory, a volatile or non-volatile memory, a file server, etc.

In the example illustrated in FIG. 1, the encoding side device 1 includes a data source 11, an encoder 13 and the output interface 15. In some examples, the data source 11 may include a video capture device (such as a camera), an archive containing previously captured data, a feed interface configured to receive data from a content provider, a computer graphics system configured to generate data, or a combination of these sources. The encoder 13 may encode data from the data source 11 and then output it to the output interface 15. The output interface 15 may include at least one of a regulator, a modem or a transmitter.

In the example illustrated in FIG. 1, the decoding side device 2 includes an input interface 21, a decoder 23 and a display device 25. In some examples, the input interface 21 includes at least one of a receiver or a modem. The input interface 21 may receive the bitstream via the link 3 or from the storage device. The decoder 23 decodes the received bitstream. The display device 25 is configured to display the decoded data. The display device 25 may be integrated with other devices of the decoding side device 2 or may be provided separately. For example, the display device 25 may be a liquid crystal display, a plasma display, an organic light-emitting diode display or other types of display devices. In other examples, the decoding side device 2 may not include the display device 25, or may include other devices or apparatuses applying the decoded data.

Each of the encoder 13 and the decoder 23 of FIG. 1 may be implemented using any one or any combination of the following circuits: one or more microprocessors, digital signal processors (DSPs), application specific integrated circuits (ASICs), field programmable gate arrays (FPGAs), discrete logics, hardware. When the disclosure is partly implemented in software, instructions for the software may be stored in a suitable non-volatile computer-readable storage medium, and may be executed in hardware using one or more processors, thereby implementing the methods of the disclosure.

FIG. 2 illustrates a structural block diagram of an exemplary video encoder. In the example, descriptions are made mainly based on terms and block division modes of the H.265/HEVC standard, however, structure of the video encoder may also be applied to encoding videos with H.264/AVC, H.266/VVC and other similar standards.

As illustrated in the figure, the video encoder 20 is configured to encode video data and generate a bitstream. As illustrated in the figure, the video encoder 20 includes a prediction processing unit 100, a division unit 101, a prediction residual generation unit 102, a transform processing unit 104, a quantization unit 106, an inverse quantization unit 108, an inverse transform processing unit 110, a reconstruction unit 112, a filter unit 113, a decoded picture buffer 114, and an entropy coding unit 116. The prediction processing unit 100 includes an inter prediction processing unit 121 and an intra prediction processing unit 126. In other embodiments, the video encoder 20 may include more, fewer or different functional components than the example. Each of the prediction residual generation unit 102 and the reconstruction unit 112 is represented by a circle with a plus sign in the figure.

The division unit 101 cooperates with the prediction processing unit 100 to divide the received video data into slices, CTUs or other larger units. The video data received by the division unit 101 may be a video sequence including video pictures such as I frame, P frame, or B frame, etc.

The prediction processing unit 100 may divide CTU into CUs and perform intra prediction coding or inter prediction coding on the CU. When intra coding is performed on CU, a CU of 2N×2N may be divided into PUs of 2N×2N or N×N for intra prediction. When inter prediction is performed on CU, a CU of 2N×2N may be divided into PUs of 2N×2N, 2N×N, N×2N, N×N or other sizes for inter prediction, and asymmetric divisions of PUs may also be supported.

The inter prediction processing unit 121 may perform inter prediction on PU to generate prediction data of the PU. The prediction data includes prediction blocks of the PU, motion information of the PU and various syntax elements.

The intra prediction processing unit 126 may perform intra prediction on PU to generate prediction data of the PU. The prediction data may include prediction blocks of the PU and various syntax elements. The intra prediction processing unit 126 may try multiple selectable intra prediction modes, and select an intra prediction mode with minimal cost therefrom, to perform intra prediction on the PU.

The prediction residual generation unit 102 may generate a prediction residual block of CU based on an original block of the CU and a prediction block of PU divided from the CU.

The transform processing unit 104 may divide CU into one or more TUs, and a TU-associated prediction residual block is a sub-block obtained by dividing the prediction residual block of the CU. A TU-associated coefficient block is generated by applying one or more transforms to the TU-associated prediction residual block. For example, the transform processing unit 104 may apply Discrete Cosine Transform (DCT), directional transform or other transforms to the TU-associated prediction residual block, and may convert the prediction residual block from a pixel domain to a frequency domain.

The quantization unit 106 may quantize coefficients in the coefficient block based on a selected quantization parameter (QP). Quantization may bring quantitative losses, and a quantization level of the coefficient block may be adjusted by adjusting QP value.

The inverse quantization unit 108 and the inverse transform unit 110 may apply inverse quantization and inverse transform to the coefficient block respectively, to obtain a TU-associated reconstructed prediction residual block.

The reconstruction unit 112 may generate a reconstructed block of the CU based on the reconstructed prediction residual block and the prediction block generated by the prediction processing unit 100.

The filter unit 113 performs loop filtering on the reconstructed block and stores it in the decoded picture buffer 114. The intra prediction processing unit 126 may extract reconstructed reference information adjacent to PU from the reconstructed block buffered in the decoded picture buffer 114, to perform intra prediction on the PU. The inter prediction processing unit 121 may perform inter prediction on PUs of other pictures using a reference picture buffered in the decoded picture buffer 114 and containing the reconstructed block.

The entropy coding unit 116 may perform an entropy coding operation on the received data (such as syntax elements, quantized system blocks, motion information, etc.), for example, perform Context Adaptive Variable Length Coding (CAVLC), Context-based Adaptive Binary Arithmetic Coding (CABAC) or the like, and output a bitstream (i.e. an encoded video bitstream).

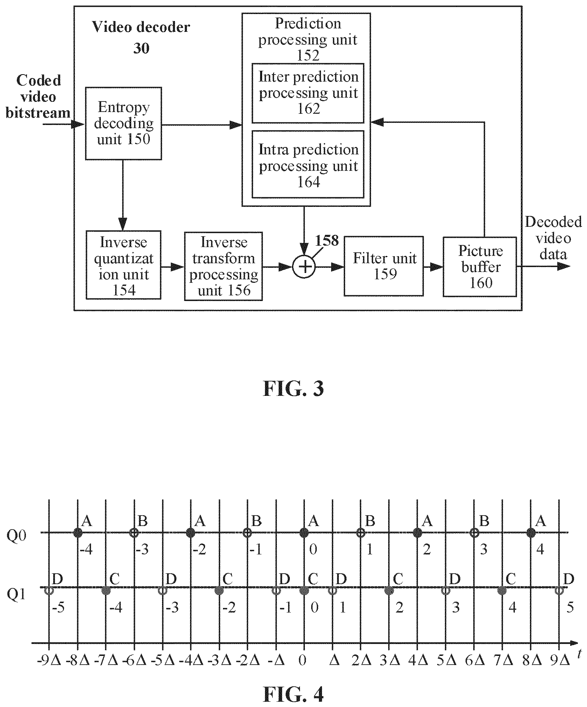

FIG. 3 illustrates a structural block diagram of an exemplary video decoder. In the example, descriptions are made mainly based on terms and block division modes of the H.265/HEVC standard, however, structure of the video decoder may also be applied to decoding videos with H.264/AVC, H.266/VVC and other similar standards.

The video decoder 30 may decode the received bitstream and output the decoded video data. As illustrated in the figure, the video decoder 30 includes an entropy decoding unit 150, a prediction processing unit 152, an inverse quantization unit 154, an inverse transform processing unit 156, a reconstruction unit 158 (represented by a circle with a plus sign in the figure), a filter unit 159, and a picture buffer 160. In other embodiments, the video decoder 30 may include more, fewer or different functional components.

The entropy decoding unit 150 may perform entropy decoding on the received bitstream, and extract information such as syntax elements, quantized coefficient blocks, motion information of PU, etc. Each of the prediction processing unit 152, the inverse quantization unit 154, the inverse transform processing unit 156, the reconstruction unit 158 and the filter unit 159 may perform corresponding operations based on the syntax elements extracted from the bitstream.

As a functional component performing a reconstruction operation, the inverse quantization unit 154 may perform inverse quantization on the quantized TU-associated coefficient block. The inverse transform processing unit 156 may apply one or more inverse transforms to the inverse-quantized coefficient block, to produce a reconstructed prediction residual block of the TU.

The prediction processing unit 152 includes an inter prediction processing unit 162 and an intra prediction processing unit 164. When the PU is coded using intra prediction, the intra prediction processing unit 164 may determine an intra prediction mode of the PU based on the syntax elements parsed from the bitstream, and perform intra prediction according to the determined intra prediction mode and reconstructed reference information adjacent to PU obtained from the picture buffer 60, to generate the prediction block of the PU. When the PU is coded using inter prediction, the inter prediction processing unit 162 may determine one or more reference blocks of the PU based on the motion information of the PU and corresponding syntax elements, and generate the prediction block of the PU based on the reference blocks.

The reconstruction unit 158 may obtain the reconstructed block of the CU based on the TU-associated reconstructed prediction residual block and the prediction block of the PU generated by the prediction processing unit 152 (i.e., intra prediction data or inter prediction data).

The filter unit 159 may perform loop filtering on the reconstructed block of the CU to obtain a reconstructed picture. The reconstructed picture is stored in the picture buffer 160. The picture buffer 160 may provide a reference picture for subsequent motion compensation, intra prediction, inter prediction, or the like, and may also output the reconstructed video data as the decoded video data to be presented on the display device.

Because video coding includes two parts, i.e., encoding and decoding, encoding on the encoding side and decoding on the decoding side may also be collectively referred to as encoding or decoding, to facilitate subsequent descriptions. According to descriptions in context of relevant steps, those skilled in the art may know that encoding (decoding) mentioned later refers to encoding on the encoding side or decoding on the decoding side. In the disclosure, terms "coding block" or "video block" may be used to refer to one or more blocks of a sample, and a syntax structure for encoding (decoding) one or more blocks of the sample; exemplary types of the coding block or the video block may include CTU, CU, PU, TU, sub-block in H.265/HEVC, or MB, MB partitions, or the like in other video encoding and decoding standards.

Some concepts involved in the embodiments of the disclosure are firstly introduced below. Relevant descriptions of the embodiments of the disclosure use terms in H.265/HEVC or H.266/VVC to facilitate explanation. However, it does not imply that solutions provided in the embodiments of the disclosure are limited to H.265/HEVC or H.266/VVC. In fact, the technical solutions provided in the embodiments of the disclosure may also be implemented in H.264/AVC, MPEG, AOM, AVS or the like, as well as follow-up and expansion of these standards.

CTU: it is abbreviation of Coding Tree Unit, which is equivalent to MB in H.264/AVC. According to a YUV sampling format, a CTU should include one luma CTB and two chroma CTBs (CrCb) at the same position.

CU: it is a basic unit for performing various types of coding operations or decoding operations in a video encoding and decoding process, such as CU-based prediction, transform, entropy coding and other operations. The CU refers to a two-dimensional sampling point array which may be a square array or a rectangular array. For example, a CU with a size of 4×8 may be considered as a square sampling point array composed of 4×8 (32 in total) sampling points. The CU may also be referred to as an image block. The CU may include a decoding block and corresponding syntax elements.

Current CU: it refers to a CU subjected to processing currently, and may also be referred to as a current block. For example, during coding, the current CU refers to a CU subjected to coding currently; during decoding, the current CU refers to a CU subjected to decoding currently.

Reference CU: it refers to a CU providing a reference signal for the current CU, and may also be referred to as a reference block. A pixel point of the reference CU refers to a pixel point contained in the reference CU. Generally speaking, the reference block is an adjacent block of the current CU.

Prediction CU: it refers to a CU providing prediction for the current CU, and may also be referred to as a PU. Each CU may contain one or more PUs. The PU may include pixel data in a spatial domain (which may be referred to as a pixel domain) and corresponding syntax elements.

Residual block: it refers to a residual image block formed by subtracting a prediction block of the current block from the current to-be-encoded block after the prediction block is generated through inter prediction and/or intra prediction, and may also be referred to as residual data.

TU: it refers to a block obtained by transforming the residual data and presenting residuals or transform coefficients, and may also be referred to as TB. Each CU may contain one or more TUs. For example, the residual data may be transformed into coefficients using transform such as DCT, an integer transform, a wavelet transform or similar transforms, that is, the residual data may be transformed from the pixel domain to a transform domain. The TU may include the above block and corresponding syntax elements.

Sub-TB (sub-block): it means that transform coefficients in the coding block are coded according to a Coding Group (CG) or a sub-block, that is, one TU includes one or more sub-TBs (i.e., sub-blocks), and the sub-TB is also referred to as CG. In HEVC, each sub-TB is composed of small blocks of 4×4, that is, each sub-TB includes one or more small blocks of 4×4. In VVC, since shape of TB is more variable, shape of the sub-TB may be 1×16, 2×8, 8×2, 2×4, 4×2 or 16×1. The sub-TBs in the coding block and the transform coefficients in the sub-TBs are coded according to a preset scanning order.

Coefficient block: it includes TB obtained by transforming the residual block and containing transform coefficients, or a residual block containing residual data (residual signals) without transforming the residual block. In the embodiment of the disclosure, the coefficients include coefficients of the TB obtained by transforming the residual block, or coefficients of the residual block, and entropy coding of the coefficients includes entropy coding of quantized coefficients of the TB, or entropy coding of quantized coefficients of the residual block when transform is not applied to the residual data. The untransformed residual signal and the transformed residual signal may also be collectively referred to as coefficients. In order for effective compression, coefficients need to be quantized in general, and the quantized coefficients may also be referred to as levels.

Quantization: it is usually used to reduce a dynamic range of coefficients, thereby achieving a purpose of expressing video with fewer code words. The quantized value is usually referred to as a level. The quantization operation usually divides a quantization step by the coefficient, and the quantization step is determined by a quantization factor transmitted in the bitstream. Inverse quantization is completed by multiplying the quantization step by the level. For a block with a size of N×M, quantization of all coefficients may be completed independently. This technology is widely used in many international video compression standards, such as H.265/HEVC, H.266/VVC, etc. A specific scanning order may transform a two-dimensional coefficient block into a one-dimensional coefficient stream. The scanning order may be Z-shaped, horizontal, vertical or any one of other scanning orders. In the international video compression standard, the quantization operation may use correlation between the coefficients and a better quantization mode is selected using characteristics of the quantized coefficients, thereby achieving a purpose of optimizing quantization.

Quantization and inverse quantization of the transform coefficient is an important part of encoding and decoding. Rate distortion optimized quantization (RDOQ) is consistent with an ordinary scalar quantization at the decoding side, it is only a quantization optimization process at the encoding side; and dependence is not present between quantization coefficients. That is, parsing and inverse quantization process of the current quantization coefficient does not depend on parity or state of a previous coefficient.

A specific process of RDOQ is as follows.

A quantized coefficient $q_k$ is inversely quantized into a reconstructed transform coefficient $t'_k$ at the decoding side. The inverse quantization process is illustrated as follows:

$$t'_k = \Delta \times q_k$$

$\Delta$ is a quantization step determined by QP. Since quantization is lossy, $t'_k$ is not equal to a true transform coefficient $t_k$. RDOQ finds $q_k$ at the encoding side, which satisfies that $\Delta \times q_k$ is less than or equal to $t_k$ and $\Delta \times (qk + 1)$ is equal to or greater than $t_k$. Bit cost required to code the current number of quantizers is R, and a distortion between the true transform coefficient and the reconstructed transform coefficient is $D=(t_k - t'_k)^2$. A quantization value with a minimum comprehensive cost is selected from $\{0, q_k, q_k +1\}$ according to a Lagrangian rate-distortion cost $J=D + \lambda \cdot R$.

Dependent Quantization (DQ) is a quantization mode. DQ is applied to the transformed block, and includes two quantizers, unlike traditional quantization. Although the two quantizers have the same quantization step (i.e., $2 \times \Delta$), reconstructed transform coefficients corresponding to the two quantizers respectively are interleaved. FIG. 4 is a schematic diagram of a quantizer Q0 and quantizer Q1 of DQ and reconstructed transform coefficients corresponding thereto respectively.

The quantizer Q0 corresponds to that a reconstructed quantization coefficient is an even multiple of $\Delta$ (that is, numbers corresponding to points A and B) (Note: the quantization step of the two quantizers each is $2 \times \Delta$, and combination of Q0 and Q1 in the dependent quantizer is equivalent to a quantization step of $\Delta$). The quantizer Q1 corresponds to that a reconstructed quantization coefficient is an odd multiple of $\Delta$ (that is, numbers corresponding to points C and D).

DQ introduces two interleaved quantizers and a principle of skipping between the quantizers, so that combination of large-step quantizers may complete finer quantization, thereby reducing loss between the reconstructed transform coefficient and an original transform coefficient, and improving coding efficiency.

Each transform coefficient may be quantized by selecting usage of one of the two quantizers Q0 and Q1 described in FIG. 4. Respective quantization modes of the two quantizers are similar to that of a traditional quantizer. The reconstructed transform coefficients of the two quantizers may be represented by multiples of the quantization step $\Delta$. The reconstructed transform coefficients of the two quantizers are defined as follows.

Q0: the reconstructed quantization coefficient of the quantizer is an even multiple (including zero times) of the quantization step $\Delta$. When the quantizer is used, the reconstructed transform coefficient t' may be calculated according to the following formula:

$$t' = 2 \bullet k \bullet \Delta$$

here, k represents a relevant quantization coefficient described in FIG. 4.

Q1: the reconstructed quantization coefficient of the quantizer is an odd multiple or zero times of the quantization step $\Delta$. When the quantizer is used, the reconstructed transform coefficient t' may be calculated according to the following formula:

$$t' = (2 \bullet k - \text{sgn}(k)) \bullet \Delta$$

here, sgn($\bullet$) represents a sign function,

$$\text{sgn}(x) = \begin{cases} 1; & x > 0 \\ 0; & x = 0 \\ -1; & x < 0 \end{cases}$$

here, x is the quantized transform coefficient.

Selecting usage of Q0 or Q1 to perform quantization is not controlled by a coded flag bit. Instead, parity of a quantized coefficient of the previous coefficient in a coefficient scanning order (the quantized coefficient described in FIG. 4) is used to decide whether Q0 or Q1 is used for the current transform coefficient.

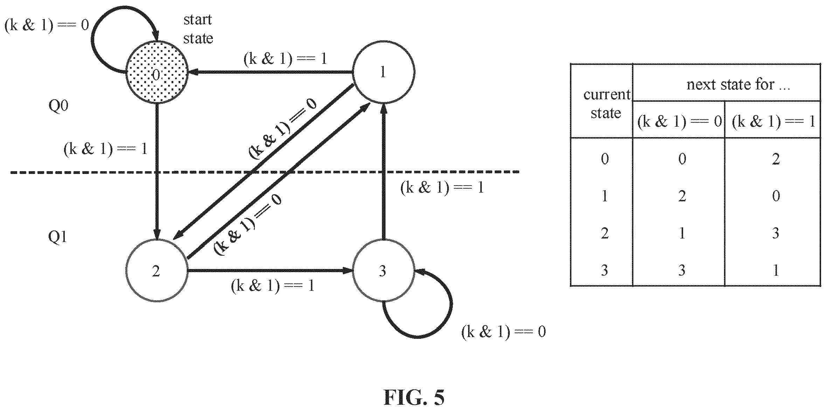

In the coefficient scanning order, a reconstructed value of the current coefficient may determine state of a next coefficient through a transition method illustrated in FIG. 5. There are four states, represented by four values, i.e., 0, 1, 2 and 3 respectively. For example, when the state of the current coefficient is 2 and the current quantization coefficient is 5, it is determined that the state of the next coefficient is skipped to state 3 since 5 is an odd number. State of a first coefficient of each TB in the scanning order is set to an initial state 0. States 0, 1, 2 and 3 also determine which quantizer is used for the current coefficient. States 0 and 1 correspond to usage of the quantizer Q0, and states 2 and 3 correspond to usage of the quantizer Q1.

Similar to implementation of RDOQ, value of the quantization coefficient $\{q_k\}$ is a process of minimizing the following Lagrangian rate-distortion cost:

$$J = D + \lambda \bullet R = \sum_k \left( t_k - t_k' \left( q_k \mid q_{k-1}, q_{k-2}, \ldots \right) \right)^2 + \lambda \bullet R_k \left( q_k \mid q_{k-1}, q_{k-2}, \ldots \right)$$

$t_k$ and $q_k$ represent an original transform coefficient and a quantization coefficient respectively, $t_k'(q_k|\ldots)$ represents a transform coefficient value reconstructed with the current quantization coefficient $q_k$, $R_k(q_k|\ldots)$ represents an estimated number of bits required to be consumed by coding $q_k$.

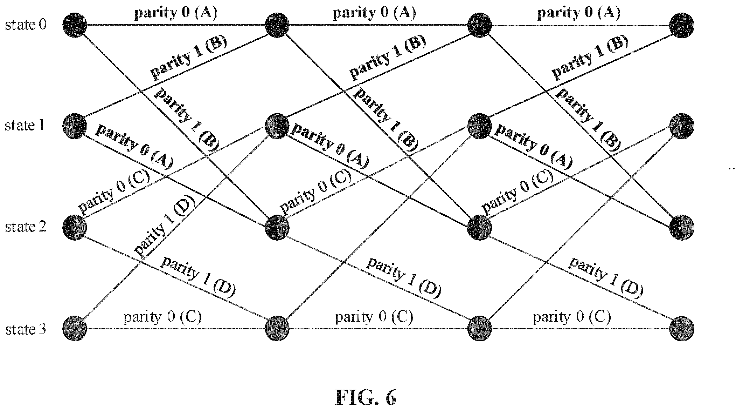

As in the state machine transition introduced previously, dependence between the quantizer and the quantization coefficient may be represented as a mesh diagram as illustrated in FIG. 6. Four states in each column represent four possible states of the current coefficient. Each node is connected to two possible state nodes of a next coefficient in the coding order. For a given current state and current transform coefficient $t_k$, the current quantizer may be used to quantize corresponding quantization coefficients. The coder may select usage of odd quantization coefficients or select usage of even quantization coefficients. The odd quantization coefficients correspond to B (Q0 with parity 1) and D (Q1 with parity 1) in FIG. 6, and the even quantization coefficients correspond to A (Q0 with parity 0) and C (Q1 with parity 0). When costs of all nodes $J_k(q_k) = (t_k - t'_k(q_k|...))^2 + \lambda \cdot R_k(q_k|...)$ are calculated, the quantization coefficient $q_k$ may be determined by finding a route with a minimum cost sum, and determination of the minimum cost sum may be achieved through a Viterbi algorithm.

Specific implementation consists of two steps:

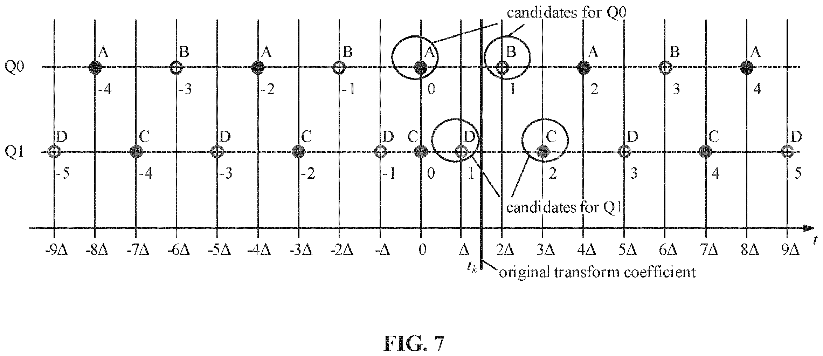

Finding four candidate quantization coefficients (FIG. 7) coming from Q0 and Q1 respectively and corresponding to the original transform coefficient; and

Using the Viterbi algorithm to determine the quantization coefficient $q_k$ of a series of current nodes with an estimated rate distortion sum (comprehensive cost corresponding to the determined quantization coefficients of previous nodes).

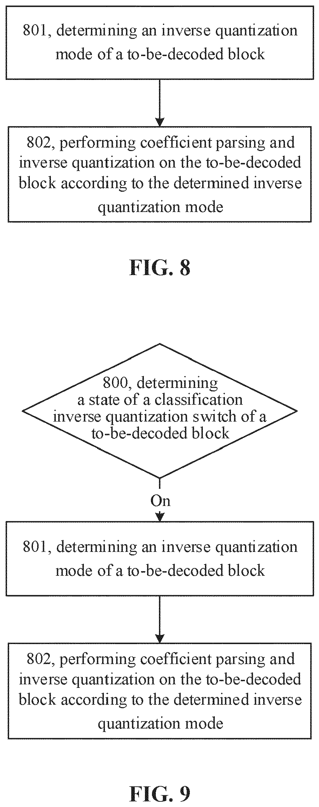

An embodiment of the disclosure provides a video decoding method, as illustrated in FIG. 8, the video decoding method includes the following operations 801 and 802.

At 801, an inverse quantization mode of a to-be-decoded block is determined.

At 802, coefficient parsing and inverse quantization are performed on the to-be-decoded block according to the determined inverse quantization mode.

In an embodiment of the disclosure, the to-be-decoded block is a TB or a sub-TB.

In an embodiment of the disclosure, the inverse quantization mode includes one of a non-dependent inverse quantization or a dependent inverse quantization.

It should be noted that an inverse quantization mode on a decoding side corresponds to a quantization mode on an encoding side.

In an embodiment of the disclosure, the operation 801 of determining the inverse quantization mode of the to-be-decoded block includes the following operation (1).

(1) A bitstream is parsed to obtain an inverse quantization mode flag of the to-be-decoded block; the inverse quantization mode of the to-be-decoded block is determined according to an inverse quantization mode indicated by the inverse quantization mode flag of the to-be-decoded block.

In an embodiment of the disclosure, the operation of parsing the bitstream to obtain the inverse quantization mode flag of the to-be-decoded block includes the following operations.

The bitstream is parsed.

The inverse quantization mode flag of the to-be-decoded block is obtained from one of a sequence level syntax element, an image level syntax element, a slice level syntax element, a CTU level syntax element, a CU level syntax element, a TU level syntax element or a sub-TB level syntax element.

It may be seen that the decoder may parse the received bitstream, to obtain the inverse quantization mode flag of the to-be-decoded TB or the to-be-decoded sub-TB, and perform parsing and inverse quantization of corresponding coefficients according to the inverse quantization mode indicated by the flag, to achieve decoding.

In an embodiment of the disclosure, the bitstream does not contain the inverse quantization mode flag of the to-be-decoded block. In this case, the decoding side cannot determine a corresponding inverse quantization mode according to indication of the inverse quantization mode flag. Instead, during decoding, the inverse quantization mode of the to-be-decoded block is determined by one of the following operations (2) to (4).

(2) A type of the to-be-decoded block is determined, and the inverse quantization mode of the to-be-decoded block is determined according to the type, the type includes a luma component and a chroma component.

(3) A proportion of non-zero coefficients in a decoded sub-TB is determined, and the inverse quantization mode of the to-be-decoded block is determined according to the proportion of non-zero coefficients.

(4) An encoding mode of the to-be-decoded block is determined, and the inverse quantization mode of the to-be-decoded block is determined according to the encoding mode, the encoding mode includes a context model-based encoding mode and a non-context model-based encoding mode.

It may be seen that the inverse quantization mode may be determined according to (1) after parsing the received bitstream to obtain the inverse quantization mode flag of the to-be-decoded block, the inverse quantization mode flag is written by the encoding side; optionally, the inverse quantization mode may also be determined by the decoding side according to (2), (3) or (4) under a preset relevant rule, and the encoding side also determines a quantization mode of its own coding block according to a corresponding consistent rule, so that decoding corresponds to encoding.

In an embodiment of the disclosure, the inverse quantization mode indicated by the inverse quantization mode flag includes one of a non-independent inverse quantization or a dependent inverse quantization. For example, the inverse quantization mode flag has 1 bit, 1 indicates the non-dependent inverse quantization, 0 indicates the dependent inverse quantization, or vice versa. The inverse quantization mode flag may also be other values such as true, false, or other values, which are not limited here.

In an embodiment of the disclosure, the inverse quantization mode flag may also indicate other inverse quantization modes which are not limited to the above two modes in the examples of the disclosure. Correspondingly, an inverse quantization mode flag with a suitable length is correspondingly designed according to a number of inverse quantization modes to be indicated. For example, there are four inverse quantization modes, the inverse quantization mode flag has 2 bits corresponding to the four inverse quantization modes respectively. Those skilled in the art may infer other situations according to the above examples, which will not be elaborated here.

Inverse quantization modes of multiple sub-TBs belonging to a same TB are the same or different.

It may be seen that with the solutions provided in the embodiments of the disclosure, a corresponding inverse quantization mode may be used for each to-be-decoded block. When the to-be-decoded block is a sub-TB, a corresponding inverse quantization mode may be used for each to-be-decoded sub-TB. In an embodiment of the disclosure, when different sub-TBs in the same TU correspond to different inverse quantization modes, different sub-TBs in the TU use their own determined inverse quantization modes respectively, for inverse quantization.

It may be seen that the inverse quantization mode flag for the to-be-decoded block may be obtained from syntax elements at multiple levels of a decoding unit (decoder unit). The sub-block level syntax element carries the inverse quantization mode flag of the sub-TB; or, the belonged TU level syntax element carries one or more inverse quantization mode flags of all or part of the sub-TBs included in the TB; or, the belonged CU level syntax element carries one or more inverse quantization mode flags of all or part of TBs included in the CU, or of all or part of sub-TBs included in the CU. Alternatively, higher-level syntax elements may also be used to carry the inverse quantization mode flag of each to-be-decoded block.

In an embodiment of the disclosure, in operation 801, the operation of determining the inverse quantization mode of the to-be-decoded block according to the type includes one of the following operations.

The inverse quantization mode of the to-be-decoded block is determined as a dependent inverse quantization, in case that the type of the to-be-decoded block is the luma component.

The inverse quantization mode of the to-be-decoded block is determined as a non-dependent inverse quantization, in case that the type of the to-be-decoded block is the luma component.

The inverse quantization mode of the to-be-decoded block is determined as a non-dependent inverse quantization, in case that the type of the to-be-decoded block is the chroma component.

An inverse quantization mode of a sub-TB of the luma component is determined as a dependent inverse quantization, in case that the to-be-decoded block is the sub-TB of the luma component and the sub-TB is a first sub-TB of a TB to which the sub-TB belongs.

An inverse quantization mode of a sub-TB of the luma component is determined as a non-dependent inverse quantization, in case that the to-be-decoded block is the sub-TB of the luma component and the sub-TB is a first sub-TB of a TB to which the sub-TB belongs.

An inverse quantization mode of a sub-TB of the chroma component is determined as a non-dependent inverse quantization, in case that the to-be-decoded block is the sub-TB of the chroma component and the sub-TB is a first sub-TB of a TB to which the sub-TB belongs.

The inverse quantization mode of the to-be-decoded block is determined as a dependent inverse quantization, in case that the type of the to-be-decoded block is the chroma component.

An inverse quantization mode of a sub-TB of the chroma component is determined as a non-dependent inverse quantization, in case that the to-be-decoded block is the sub-TB of the chroma component and the sub-TB is a first sub-TB of a TB to which the sub-TB belongs.

It may be seen that according to the type of the to-be-decoded block, the decoding side may determine the inverse quantization mode of the current TB or sub-TB. The inverse quantization mode determined for the current TB or sub-TB corresponds to the mode by which the encoding side performs quantization on the TB or sub-TB.

It should be noted that in some embodiments, considering that the residual values of the chroma component are relatively fewer and impact of chroma on overall subjective and objective qualities is relatively smaller, different quantization modes may only be used for the luma component at the encoding side, the decoding side uses a consistent way to determine that different modes are only used for the luma component, which may save encoding and decoding overhead to a certain extent.

In an embodiment of the disclosure, in operation 801, the operation of determining the proportion of non-zero coefficients in the decoded sub-TB, and determining the inverse quantization mode of the to-be-decoded block according to the proportion of non-zero coefficients include one of the following operations.

A proportion of non-zero coefficients in a first preset number of decoded sub-TBs is determined, and the inverse quantization mode of the to-be-decoded block is determined as a dependent inverse quantization, in case that the proportion of non-zero coefficients is greater than a first preset proportion threshold.

A proportion of non-zero coefficients in a second preset number of decoded sub-TBs is determined, and the inverse quantization mode of the to-be-decoded block is determined as a non-dependent inverse quantization, in case that the proportion of non-zero coefficients is less than or equal to a second preset proportion threshold.

It should be noted that at the encoding side, when a ratio of a number of non-zero coefficients in one or more encoded sub-TBs before a to-be-encoded sub-TB to a total number of coefficients in one or more encoded sub-TBs before the sub-TB is greater than the first preset proportion threshold, it indicates that there are a large number of non-zero coefficients in one or more encoded sub-TBs before the sub-TB, then the current sub-TB uses DQ so that better performance is achieved; when a ratio of a number of non-zero coefficients in one or more encoded sub-TBs before a to-be-encoded sub-TB to a total number of coefficients in the sub-TB is less than or equal to the second preset proportion threshold, it indicates that there are a few number of non-zero coefficients in one or more encoded sub-TBs before the sub-TB, then the current sub-TB uses RDOQ so that better performance is achieved. Accordingly, the decoding side uses a corresponding mode to determine the inverse quantization mode of the to-be-decoded block, which may effectively reduce encoding and decoding overhead. According to the correspondence between the decoding side and the encoding side, those skilled in the art may know the implementation that the inverse quantization mode of the to-be-decoded block is determined according to the ratio of non-zero coefficients in the decoded sub-TB (i.e., in one or more decoded sub-TBs before a current to-be-decoded TB or a current to-be-decoded sub-TB).

It should be noted that the first preset number may be equal or not equal to the second preset number, and the first preset proportion threshold may be equal or not equal to the second preset proportion threshold.

It may be seen that the decoding side may determine the inverse quantization mode of the current sub-TB according to coefficient characteristics in the sub-TB which have been parsed (decoded) by the encoding side, and the inverse quantization mode determined for the current sub-TB corresponds to the mode by which the encoding side performs quantization on the sub-TB.

In an embodiment of the disclosure, in operation 801, the operation of determining the inverse quantization mode of the to-be-decoded block according to the encoding mode includes one of the following operations.

The inverse quantization mode of the to-be-decoded block is determined as a non-dependent inverse quantization or a dependent inverse quantization, in case that the encoding mode is the context model-based encoding mode.

The inverse quantization mode of the to-be-decoded block is determined as a non-dependent inverse quantization or a dependent inverse quantization, in case that the encoding mode is not the context model-based encoding mode.

In an embodiment of the disclosure, the operation of determining the inverse quantization mode of the to-be-decoded block according to the encoding mode further includes one of the following operations.

The to-be-decoded block is a sub-TB, the inverse quantization mode of the sub-TB is determined as the non-dependent inverse quantization or the dependent inverse quantization, in case that the encoding mode is the context model-based encoding mode; and the inverse quantization mode of the sub-TB is determined as the non-dependent inverse quantization, in case that the encoding mode is not the context model-based encoding mode.

The to-be-decoded block is a sub-TB, the inverse quantization mode of the sub-TB is determined as the non-dependent inverse quantization or the dependent inverse quantization, in case that the encoding mode is the context model-based encoding mode; and the inverse quantization mode of the sub-TB is determined as the non-dependent inverse quantization, in case that the encoding mode is not the context model-based encoding mode.

The to-be-decoded block is a sub-TB, the inverse quantization mode of the sub-TB is determined as the dependent inverse quantization, in case that the encoding mode is the context model-based encoding mode; and the inverse quantization mode of the sub-TB is determined as the non-dependent inverse quantization, in case that the encoding mode is not the context model-based encoding mode.

The to-be-decoded block is a sub-TB, the inverse quantization mode of the sub-TB is determined as the non-dependent inverse quantization, in case that the encoding mode is the context model-based encoding mode; and the inverse quantization mode of the sub-TB is determined as the dependent inverse quantization, in case that the encoding mode is not the context model-based encoding mode.

It may be seen that according to different encoding modes, the sub-TB with one of the encoding modes may be selected to perform inverse quantization in different modes, and the inverse quantization mode determined for the current sub-TB corresponds to the mode by which the encoding side performs quantization on the sub-TB.

It should be noted that for the current TB or sub-TB, the inverse quantization mode of the TB or sub-TB is determined according to one of the above optional solutions. For different sub-TBs in the TB, the inverse quantization mode of each sub-TB may be determined according to the same or different modes without conflict. Those skilled in the art may understand corresponding implementations, and various combinations will not be developed and elaborated here.

In an embodiment of the disclosure, in operation 802, the operation of performing coefficient parsing and inverse quantization on the to-be-decoded block according to the determined inverse quantization mode includes one of the following operations (1) to (3).

(1) Coefficient parsing and inverse quantization ie performed on the to-be-decoded block according to non-dependent inverse quantization mode in a relevant technical solution, in case that the inverse quantization mode is the non-dependent inverse quantization.

(2) Coefficient parsing and inverse quantization is performed on the to-be-decoded sub-TB, in case that the determined inverse quantization mode is the dependent inverse quantization, and after a first coefficient in the to-be-decoded sub-TB is initialized to state 0.

(3) Coefficient parsing and inverse quantization is performed on the to-be-decoded sub-TB, in case that the determined inverse quantization mode is the dependent inverse quantization, and in case that a previous decoded sub-TB based on DQ is present in a TB to which the to-be-decoded sub-TB belongs, and after state of a first coefficient in the to-be-decoded sub-TB is determined according to state and parity of a last coefficient in the previous decoded sub-TB based on DQ; and coefficient parsing and inverse quantization is performed on the to-be-decoded sub-TB, in case that a previous decoded sub-TB based on DQ is not present in a TB to which the to-be-decoded sub-TB belongs, and after a first coefficient in the to-be-decoded sub-TB is initialized to state 0.

It may be seen that in a TB allowed to use the dependent inverse quantization, state transition occurs one by one in the coefficient scanning order. For variations to the sub-TB quantization mode added to the sub-TB level, such state transition may be implemented by the above two inverse quantization modes (2) and (3).

An embodiment of the disclosure further provides a video decoding method, as illustrated in FIG. 9, the video decoding method includes the following operations 800, 801 and 802.

At 800, a state of a classification and inverse quantization switch of a to-be-decoded block is determined. When the classification and inverse quantization switch of the to-be-decoded block is in an on state, operations 801 and 802 are performed.

In an embodiment of the disclosure, in operation 800, the operation of determining the state of the classification and inverse quantization switch of the to-be-decoded block includes the following operations.

The state of the classification and inverse quantization switch of the to-be-decoded block is acquired from a sequence level syntax element in a to-be-decoded bitstream.

Alternatively, the state of the classification and inverse quantization switch of the to-be-decoded block is acquired from a picture level syntax element in a to-be-decoded bitstream.

Alternatively, the state of the classification and inverse quantization switch of the to-be-decoded block is acquired from a slice level syntax element in a to-be-decoded bitstream.

Alternatively, the state of the classification and inverse quantization switch of the to-be-decoded block is acquired from a CTU level syntax element in a to-be-decoded bitstream.

In an embodiment of the disclosure, the state of the classification and inverse quantization switch of the to-be-decoded block acquired from the syntax element of the to-be-decoded bitstream may be determined according to relevant flags in the syntax element. A first flag indicates that the state of the classification and inverse quantization switch of the to-be-decoded block is an on state, and a second flag indicates that the state of the classification and inverse quantization switch of the to-be-decoded block is an off state. The first flag or the second flag is not limited to a specific form, and may be 1 or 0, or may be true or false, or may be other values.

It may be seen that whether the method of operations 801 and 802 is executed, may be determined according to the state (the first flag or the second flag) of the classification and inverse quantization switch of the to-be-decoded block contained in a high-level syntax structure. In case that the state of the classification and inverse quantization switch of the to-be-decoded block is on, it is necessary to determine the inverse quantization mode of each to-be-decoded block in subsequent decoding processes, to perform inverse quantization respectively; and in case that the state of the classification and inverse quantization switch of the to-be-decoded block is off, it is unnecessary to determine the inverse quantization mode of each to-be-decoded block in subsequent decoding processes, and inverse quantization is performed according to corresponding processes in relevant specifications.

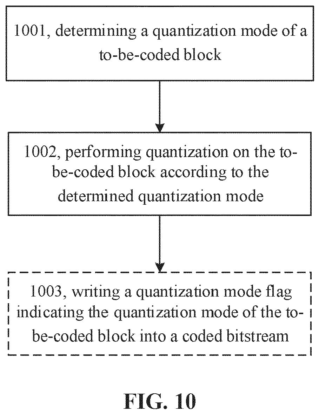

An embodiment of the disclosure further provides a video encoding method, as illustrated in FIG. 10, the video encoding method includes the following operations 1001 and 1002.

At 1001, a quantization mode of a to-be-encoded block is determined.

At 1002, quantization is performed on the to-be-encoded block according to the determined quantization mode.

In an embodiment of the disclosure, the to-be-encoded block is a TB or a sub-TB.

In an embodiment of the disclosure, the method further includes the following operation 1003.

A quantization mode flag indicating the quantization mode of the to-be-encoded block is written into an encoded bitstream. That is, data corresponding to the quantization mode flag of the to-be-encoded block is written into the encoded bitstream, the quantization mode flag of the to-be-encoded block is configured to instruct the decoding side to determine a mode by which inverse quantization is performed on the received to-be-decoded block according to the flag.

In an embodiment of the disclosure, the quantization mode of the to-be-encoded block is one of RDOQ mode or DQ mode.

In an embodiment of the disclosure, the quantization mode flag of the to-be-encoded block may also indicate other quantization modes which are not limited to the above two modes in the examples of the disclosure. Correspondingly, a quantization mode flag of the to-be-encoded block with a suitable length is correspondingly designed according to a number of quantization modes to be indicated. For example, there are two quantization modes: RDOQ and DQ. Then, the quantization mode flag has 1 bit, 1 indicates RDOQ, 0 indicates DQ, or vice versa. For example, there are four quantization modes, then the quantization mode flag of the sub-TB has 2 bits corresponding to four quantization modes respectively. Those skilled in the art may infer other situations according to the above examples, which will not be elaborated here.

It should be noted that in an embodiment of the disclosure, after the flag indicating RDOQ at the encoding side is written into the bitstream, the decoding side considers it as a "non-dependent inverse quantization flag".

In an embodiment of the disclosure, the to-be-encoded block is a TB including multiple sub-TBs.

The operation of determining the quantization mode of the to-be-encoded block includes the following operations. Quantization modes of multiple sub-TBs included in the to-be-encoded block are determined respectively. The quantization modes of multiple sub-TBs are the same or different.

Correspondingly, in operation 1003, the quantization mode flags written by different to-be-encoded sub-TBs belonging to the same TB are the same or different.

In an embodiment of the disclosure, in operation 1003, the operation of writing the quantization mode flag indicating the quantization mode of the to-be-encoded block into the encoded bitstream includes the following operations.

The quantization mode flag is written into one of the following syntax elements of the encoded bitstream: a sequence level syntax element, an image level syntax element, a slice level syntax element, a CTU level syntax element, a CU level syntax element, a TU level syntax element or a sub-TB level syntax element.

It may be seen that with the solutions provided in the embodiments of the disclosure, different quantization modes may be used for each to-be-encoded TB or sub-TB, and the flag indicating the quantization mode used for each TB or sub-TB is written into the syntax element, to instruct the decoding side to perform inverse quantization of a corresponding method on each TB or sub-TB according to the flag respectively.

In an embodiment of the disclosure, in operation 1003, the quantization mode flag of each TB or sub-TB may be set independently, and then written into each sub-TB level syntax element; or, written into the TU level syntax element; or, written into the CU level syntax element of the coding unit; or, written into the CTU level syntax element; or, written into the slice level syntax element; or, written into the image level syntax element; or, written into the sequence level syntax element.

In an embodiment of the disclosure, in operation 1003, the quantization mode flag of each to-be-encoded block may also be set by way of setting multiple flags jointly. The decoding side may parse each quantization mode flag reversely according to a preset joint-setting rule. For example, in one TU, the first five sub-TBs are RDOQ, and the last eleven sub-TBs are DQ, then 16-bit data 1111100000000000 may be set in a syntax unit of the TU to indicate that quantization modes of sixteen sub-TBs included in the TU are RDOQ or DQ respectively; or, 1, 5, 1; 6, 11, 0 may also be set in the syntax unit of the TU, to indicate that quantization mode flags of five consecutive sub-TBs starting from the first sub-TB are 1 (indicating RDOQ), and quantization mode flags of eleven consecutive sub-TBs starting from the sixth sub-TB are 0 (indicating DQ). It may be seen that with the solutions provided in the embodiments of the disclosure, the quantization or inverse quantization mode for the TB or sub-TB level may be indicated by expanding data carried in the encoded bitstream, and encoding modes of carried data and/or specific carried positions are not limited to contents of examples of the disclosure, and those skilled in the art may alternatively select different implementations according to the above examples.

In an embodiment of the disclosure, in operation 1001, the operation of determining the quantization mode of the to-be-encoded block includes one of the following operations.

The quantization mode of the to-be-encoded block is determined as a DQ mode, in case that a type of the to-be-encoded block is a luma component.

The quantization mode of the to-be-encoded block is determined as a RDOQ mode, in case that the type of the to-be-encoded block is the luma component.

The quantization mode of the to-be-encoded block is determined as a RDOQ mode, in case that the type of the to-be-encoded block is a chroma component.

A quantization mode of a sub-TB of the luma component is determined as a dependent inverse quantization mode, in case that the to-be-encoded block is the sub-TB and the sub-TB is a first sub-TB of a TB to which the sub-TB belongs.

A quantization mode of a sub-TB of the luma component is determined as a RDOQ mode, in case that the to-be-encoded block is the sub-TB and the sub-TB is a first sub-TB of a TB to which the sub-TB belongs.

A quantization mode of a sub-TB of the chroma component is determined as a RDOQ mode, in case that the to-be-encoded block is the sub-TB and the sub-TB is a first sub-TB of a TB to which the sub-TB belongs.

An inverse quantization mode of the to-be-encoded block is determined as a dependent inverse quantization, in case that the type of the to-be-encoded block is the chroma component.

An inverse quantization mode of a sub-TB of the chroma component is determined as a non-dependent inverse quantization, in case that the to-be-encoded/decoded block is the sub-TB and the sub-TB is a first sub-TB of a TB to which the sub-TB belongs.

In an embodiment of the disclosure, the to-be-encoded sub-TB is a sub-TB of the luma component; or, the to-be-encoded sub-TB includes a sub-TB of the luma component and a sub-TB of the chroma component.

It should be noted that in an embodiment of the disclosure, considering that the residual values of the chroma component are relatively fewer and impact of chroma on overall subjective and objective qualities is relatively smaller, different quantization modes may only be used for the luma TB or sub-TB respectively, that is, the above methods 1001 and 1002 or 1001 to 1003 are performed only on the TB or sub-TB of the luma component, and differentiated quantization is not performed on TBs or sub-TBs of other components.

In an embodiment of the disclosure, in operation 1001, the operation of determining the quantization mode of the to-be-encoded block includes one of the following operations (1) and (2).

(1) A number of sub-TBs included in a to-be-encoded TB is determined, and the quantization mode of the to-be-encoded block is determined as a DQ mode or a RDOQ mode in case that the number of sub-TBs is equal to or greater than a first number threshold and is less than or equal to a second number threshold.
It may be seen that when a ratio of a number of non-zero coefficients in one or more encoded sub-TBs before a to-be-encoded sub-TB to a total number of coefficients in one or more encoded sub-TBs before the sub-TB is greater than a preset proportion threshold (for example, a first preset proportion threshold is 90%), it indicates that there are a large number of non-zero coefficients in one or more encoded sub-TBs before the sub-TB, then the sub-TB uses DQ so that better performance is achieved.

(2) A number of sub-TBs included in a to-be-encoded TB is determined, and the quantization mode of the to-be-encoded block is determined as a DQ mode or a RDOQ mode in case that the number of sub-TBs is less than a third number threshold.

It may be seen that when a ratio of a number of non-zero coefficients in one or more encoded sub-TBs before a to-be-encoded sub-TB to a total number of coefficients in the sub-TB is less than or equal to a preset proportion threshold (for example, a second preset proportion threshold is 50%), it indicates that there are a few number of non-zero coefficients in one or more encoded sub-TBs before the sub-TB, then the sub-TB uses RDOQ so that better performance is achieved.

The first preset proportion threshold is set independently with respect to the second preset proportion threshold, and may be the same as or different from the second preset proportion threshold. The first number threshold is set independently with respect to the second number threshold, and may be the same as or different from the second number threshold.

Whether the residual block to which the TB or sub-TB belongs is allowed to use DQ, is determined according to a relevant solution and is not limited to a specific determination mode. For example, in the relevant solution, DQ is only applied to a Regular Residual Coding (RRC) TB, then it is determined that the RRC TB is allowed to use DQ, and a quantization mode of a to-be-encoded sub-TB thereof may be DQ or RDOQ. For example, in the relevant solution, DQ is not applied to a Transform Skip Residual Coding (TSRC) TB, then it is determined that the TSRC TB is not allowed to use DQ. Alternatively, for example, DQ may be applied to the RRC TB or the TSRC TB. Then, when the to-be-encoded sub-TB belongs to the RRC TB or the TSRC TB, it is determined that the two TBs are allowed to use DQ. Then, the quantization mode of the to-be-encoded sub-TB may be DQ or RDOQ.

In an embodiment of the disclosure, in operation 1001, the operation of determining the quantization mode of the to-be-encoded block includes one of the following operations (1) and (2).

(1) A number of sub-TBs included in a to-be-encoded TB is determined, and the quantization mode of the to-be-encoded block is determined as a DQ mode or a RDOQ mode in case that the number of sub-TBs is equal to or greater than a first number threshold and is less than or equal to a second number threshold.

It should be noted that experiments have illustrated that when a number of sub-blocks in a TB is less than a certain number, a potential possibility is that there are a few number of non-zero coefficients in the TB. For such block, cost brought by additionally consuming the quantization mode flag of the sub-TB is relatively large; when a number of sub-TBs in a TB is greater than a certain number, the encoding side performing DQ or RDOQ on each sub-block will bring significant time complexity and computational complexity. Therefore, in an embodiment of the disclosure, it may be defined that the methods of operations 1001 and 1002 or 1001 to 1003 are used only when a number of sub-TBs in a TB is less than the first number threshold or greater than the second number threshold, to perform sub-TB level classification and quantization.

(2) A number of sub-TBs included in a to-be-encoded TB is determined, and the quantization mode of the to-be-encoded block is determined as a DQ mode or a RDOQ mode in case that the number of sub-TBs is less than a third number threshold.

For example, the third number threshold is 2, and when the number of sub-TBs is 1, the quantization mode for such to-be-encoded sub-TB is determined as DQ or RDOQ.

It should be noted that the above third number threshold is set separately from the above first number threshold and second number threshold, and involved solutions are used in different situations without conflict there-between.

In an embodiment of the disclosure, the quantized coefficient may use a context model-based encoding mode or a non-context model-based encoding mode.

In an embodiment of the disclosure, in the relevant solution, a number of bins for context encoding which may be used by each TB is limited, and the number is remBinsPass1. When the number remBinsPass1 is used up, all coefficients will not use context model encoding any more. The context model encoding is more complex, therefore, VVC limits a number of bins for the context model encoding in each block based on control of complexity.

$$remBinsPass1 = ((1 << (log2TbWidth + log2TbHeight)) * 7) >> 2)$$

Therefore, considering control of complexity of encoding and decoding algorithms, in an embodiment of the disclosure, in operation 1001, the operation of determining the quantization mode of the to-be-encoded block includes one of the following operations (1) and (2).

(1) The to-be-encoded block is a sub-TB, a quantization mode of the sub-TB is determined as a DQ mode or a RDOQ mode, in case that an encoding mode used for a TB to which the sub-TB belongs is a context model-based encoding mode, and a number of remaining binarization flags based on the context model-based encoding mode that are available to a to-be-encoded TB to which the sub-TB belongs, is greater than a threshold number of binarization flags.

(2) The to-be-encoded block is a sub-TB, a quantization mode of the sub-TB is determined as a RDOQ mode or a DQ mode, in case that an encoding mode used for a TB to which the sub-TB belongs is a context model-based encoding mode, and a number of remaining binarization flags based on the context model-based encoding mode that are available to the TB to which the sub-TB belongs, is less than or equal to a threshold number of binarization flags.

In an embodiment of the disclosure, the threshold number of binarization flags is 0. When the number of binarization flags is greater than 0, it indicates that available binarization flags are still present, then the current sub-TB may use the context model-based encoding mode; and when the number of binarization flags is less than or equal to 0, it indicates that available binarization flags are not present, then the current sub-TB cannot use the context model-based encoding mode.

It should be noted that in the relevant solution, the TB is encoded using the context model-based encoding mode. Due to usage constraints of the number of binarization flags of the context model-based encoding mode, the sub-TBs included in the TB are differentiated to be encoded by using the context model-based encoding mode and a mode different from the context model-based encoding mode. In order to further reduce encoding and decoding cost, differentiated quantization may be selectively performed on the sub-TBs in which the context model-based encoding mode is used, and differentiated quantization is not performed on other sub-TBs; or, differentiated quantization may be selectively performed on the sub-TBs in which the context model-based encoding mode is not used, and differentiated quantization is not performed on other sub-TBs.

It should be noted that for the current sub-TB, the quantization mode of the TB or sub-TB is determined according to one of the above optional solutions. For different sub-TBs in the TB, the quantization mode of each sub-TB may be determined according to the same or different modes without conflict. Those skilled in the art may understand corresponding implementations, and various combinations will not be developed and elaborated here.

In an embodiment of the disclosure, when the determined quantization mode is RDOQ, the operation of performing quantization on the to-be-encoded block in operation 1002 includes the following operation (1).

(1) It is determined that the quantization mode is RDOQ, and then quantization is performed on the to-be-encoded block according to RDOQ in the relevant technical solution.

In an embodiment of the disclosure, when the determined quantization mode is DQ, the operation of performing quantization on the to-be-encoded block in operation 1002 includes the following operations (2) and (3).

(2) The to-be-encoded block is a sub-TB, and DQ is performed on the to-be-encoded block after a first coefficient in the sub-TB is initialized to state 0.

(3) The to-be-encoded block is a sub-TB, and DQ is performed on the to-be-encoded block, in case that a previous encoded sub-TB based on DQ is present in a TB to which the sub-TB belongs, and after state of a first coefficient in the sub-TB is determined according to state and parity of a last coefficient in the previous encoded sub-TB based on DQ; DQ is performed on the to-be-encoded block, in case that a previous encoded sub-TB based on DQ is not present in a TB to which the sub-TB belongs, and after a first coefficient in the sub-TB is initialized to state 0.

It may be seen that in a TB allowed to use DQ, state transition occurs one by one in the coefficient scanning order. For variations to the sub-TB quantization mode added to the sub-TB level, such state transition may be implemented by the above two quantization modes (2) and (3).

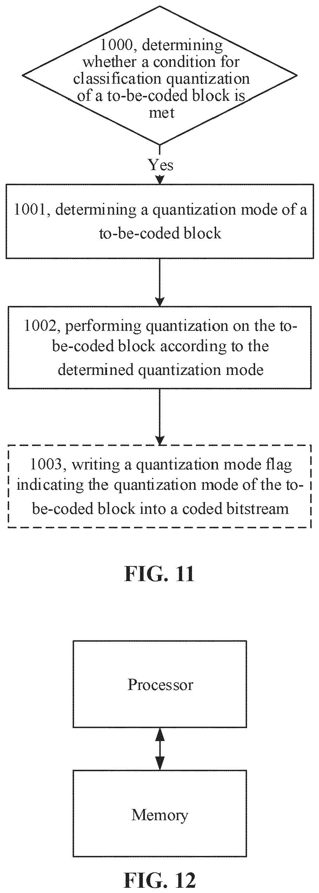

In an embodiment of the disclosure, the embodiment of the disclosure further provides a video encoding method, as illustrated in FIG. 11, the video encoding method includes the following operation 1000.

At 1000, it is determined whether a condition for classification and quantization of a to-be-encoded block is met; and when the condition for classification and quantization of the to-be-encoded block is met, the methods of operations 1001 and 1002 or 1001 to 1003 are performed to encode video data.

In an embodiment of the disclosure, the method further includes the following operation 1004. At 1004, when the condition for classification and quantization of the to-be-encoded block is met, a first flag indicating that a classification and quantization switch of the to-be-encoded block is an on state is written into a bitstream after encoding the video data. The first flag is configured to indicate that a decoding side needs to determine inverse quantization modes of to-be-decoded blocks respectively during decoding, and perform coefficient parsing and inverse quantization according to the inverse quantization mode of each to-be-decoded block.

In an embodiment of the disclosure, the method further includes the following operation 1005. At 1005, when the condition for classification and quantization of the to-be-encoded block is not met, a second flag indicating that a classification and quantization switch of the to-be-encoded block is an off state is written into a bitstream after encoding the video data. The second flag is configured to indicate that a decoding side does not need to determine inverse quantization modes of to-be-decoded blocks respectively during decoding.

In an embodiment of the disclosure, meeting the condition for classification and quantization of the to-be-encoded block includes at least one of the following:

a preset switch state in an encoding device is on;

a version of an encoding system of the encoding device meets a first preset version range;

a version of a decoding system of a decoding device meets a second preset version range;

a hardware processing capability of the encoding device meets a first hardware requirement;

a hardware output capability of the decoding device meet a second hardware requirement; or

an available bandwidth between the encoding device and the decoding device meets a preset bandwidth requirement.

Writing the first flag or the second first into the bitstream after encoding the video data may be writing the first flag or the second first into a sequence level syntax element in the bitstream; or, writing the first flag or the second first into a picture level syntax element in the bitstream; or, writing the first flag or the second first into a slice level syntax element in the bitstream; or, writing the first flag or the second first into a CTU level syntax element in the bitstream. According to the examples of the disclosure, those skilled in the art may also use existing syntax elements in the encoded bitstream or develop new syntax elements to carry the first flag or the second flag. The decoding side performs corresponding decoding operations based on the first flag or the second flag. In case that the first flag is obtained through parsing, the decoding side further determines the quantization mode of each to-be-decoded block, and then performs coefficient parsing and inverse quantization of the to-be-decoded block correspondingly.

An embodiment of the disclosure further provides a video decoding device, as illustrated in FIG. 12. The video decoding device includes a processor, and a memory storing a computer program executable by the processor. The processor implements the video decoding method of any one of the embodiments of the disclosure when the processor executes the computer program.

An embodiment of the disclosure further provides a video encoding device, as illustrated in FIG. 12. The video encoding device includes a processor, and a memory storing a computer program executable by the processor. The processor implements the video encoding method of any one of the embodiments of the disclosure when the processor executes the computer program.

An embodiment of the disclosure further provides a video encoding and decoding system, the video encoding and decoding system includes the video encoding device of any one of the embodiments of the disclosure and/or the video decoding device of any one of the embodiments of the disclosure.

An embodiment of the disclosure further provides a non-transitory computer-readable storage medium, and the computer-readable storage medium stores a computer program. The computer program implements the video decoding method or the video encoding method of any one of the embodiments of the disclosure when the computer program is executed by a processor.

An embodiment of the disclosure further provides a bitstream, the bitstream is generated according to the video encoding method of any one of the embodiments of the disclosure. The bitstream includes a quantization mode flag configured to indicate a mode by which quantization or inverse quantization is performed on a to-be-encoded block or a to-be-decoded block.

DQ and RDOQ are selected to be used in different encoding and decoding solutions in quantization/inverse quantization operations of relevant coding. In the relevant technology, only one quantization mode may be used for any TU. According to experimental results, it may be understood that DQ is not superior over RDOQ in any case. It may be seen that the video encoding method and the video decoding method proposed by the embodiments of the disclosure increase granularity of quantization mode at the TB or sub-TB level, and may control the quantization mode at the TB or sub-TB level, so that the same or different quantization modes may be used according to characteristics of each TB or sub-TB respectively, making full use of processing advantages of different quantization modes to improve encoding and decoding performance as a whole.

In one or more exemplary embodiments, the described functions may be implemented in hardware, software, firmware, or any combination thereof. When the functions are implemented in software, the functions may be stored on a computer-readable medium as one or more instructions or codes, or transmitted through the computer-readable medium, and executed by a hardware-based processing unit. The computer-readable medium may include a computer-readable storage medium corresponding to a tangible medium such as a data storage medium or the like, or a communication media including any medium which facilitates transmission of a computer program from one place to another place, for example according to a communications protocol. In this way, the computer-readable medium may usually correspond to a non-transitory, tangible computer-readable storage medium or a communication medium such as a signal, a carrier wave, or the like. The data storage medium may be any available medium which may be accessed by one or more computers or one or more processors to retrieve instructions, codes and/or data structures for implementing the technologies described in the disclosure. A computer program product may include the computer-readable medium.

By way of example, rather than limitation, such computer-readable storage medium may include RAM, Read-Only Memory (ROM), EEPROM, CD-ROM, or other optical disk storage devices, magnetic disk storage devices or other magnetic storage devices, a flash memory, or any other medium which may be used to store desired program codes in form of instructions or data structures and may be accessed by a computer. Furthermore, any connection may also be referred to as a computer-readable medium. For example, when instructions are transmitted from a website, a server or other remote sources using a coaxial cable, a fiber-optic cable, a twisted pair cable, a digital subscriber line (DSL), or a wireless technology such as infrared, radio, microwave or the like, then the coaxial cable, the fiber-optic cable, the twisted pair cable, DSL, or the wireless technology such as infrared, radio, microwave or the like are included in definition of the medium. However, it should be understood that the computer-readable storage medium and the data storage medium do not include connections, carrier waves, signals, or other transient (transitory) media, instead, are directed to a non-transitory tangible storage medium. As used here, the magnetic disk and the optical disk include a compact disk (CD), a laser disk, an optical disk, a DVD, a floppy disk, or a Blu-ray disk. The magnetic disk usually reproduces data magnetically, while the optical disk uses lasers to reproduce data optically. Combinations of the above items should also be included within the scope of the computer-readable medium.

Instructions may be executed by one or more processors such as one or more DSPs, general purpose microprocessors, ASICs, FPGAs, or other equivalent integrated or discrete logic circuits, etc. Therefore, the term "processor" as used here may refer to any one of the above structure or any other structures suitable to implement the technologies described here. Furthermore, in some aspects, functionality described here may be provided within dedicated hardware and/or software modules configured for encoding and decoding, or incorporated in a combined codec. Furthermore, the technologies may be completely implemented in one or more circuits or logic elements.

The technical solutions of the embodiments of the disclosure may be implemented in a wide variety of devices or apparatuses, including a wireless cellphone, an integrated circuit (IC), or a set of ICs (e.g., a chipset). Various components, modules or units are described in the embodiments of the disclosure to emphasize functional aspects of devices configured to perform the described technologies, but do not necessarily require implementation by different hardware units. Instead, as described above, various units may be combined in hardware units of the codec or may be provided by a set of interoperating hardware units (including one or more processors as described above) in combination with suitable software and/or firmware.

Those of ordinary skill in the art may understand that all or some steps in the methods disclosed above and functional modules/units in the systems and devices may be implemented as software, firmware, hardware, and appropriate combinations thereof. In hardware implementations, division between functional modules/units mentioned in the above descriptions does not necessarily correspond to division of physical components; for example, a physical component may have multiple functions, or a function or operation may be performed by cooperation of several physical components. Some or all of the components may be implemented as software executed by a processor such as DSP or a microprocessor, or may be implemented as hardware, or may be implemented as IC such as ASIC. Such software may be distributed on computer-readable media which may include a computer storage medium (or a non-transitory medium) and a communication medium (or a transitory medium). As well known by those of ordinary skill in the art, the term "computer storage medium" includes volatile and non-volatile, removable and non-removable media implemented in any method or technology for storing information( such as computer readable instructions, data structures, program modules or other data). The computer storage medium includes, but is not limited to RAM, ROM, EEPROM, a flash memory or other memory technologies, CD-ROM, DVD or other optical disk storage, a magnetic cassette, a magnetic tape, a magnetic disk storage or other magnetic storage devices, or any other medium which may be used to store desired information and may be accessed by a computer. Furthermore, as well known by those of ordinary skill in the art, the communication medium usually includes computer readable instructions, data structures, program modules or other data in a modulated data signal such as a carrier wave or other transmission mechanisms, and may include any information transmission medium.

**Claims**

1. A video decoding method, comprising:

    determining an inverse quantization mode of a to-be-decoded block; and
    performing coefficient parsing and inverse quantization on the to-be-decoded block according to the determined inverse quantization mode.

2. The decoding method of claim 1, wherein the to-be-decoded block is a transform block (TB) or a sub-TB.

3. The decoding method of claim 1, wherein the inverse quantization mode comprises one of a non-dependent inverse quantization or a dependent inverse quantization.

4. The decoding method of any one of claims 1 to 3, wherein determining the inverse quantization mode of the to-be-decoded block comprises:

    parsing a bitstream to obtain an inverse quantization mode flag of the to-be-decoded block; and
    determining the inverse quantization mode of the to-be-decoded block according to an inverse quantization mode indicated by the inverse quantization mode flag of the to-be-decoded block.

5. The decoding method of any one of claims 1 to 3, wherein determining the inverse quantization mode of the to-be-decoded block comprises one of the following manners:

    determining a type of the to-be-decoded block, and determining the inverse quantization mode of the to-be-decoded block according to the type, wherein the type comprises a luma component and a chroma component;
    determining a proportion of non-zero coefficients in a decoded sub-TB, and determining the inverse quantization mode of the to-be-decoded block according to the proportion of non-zero coefficients; or
    determining an encoding mode of the to-be-decoded block, and determining the inverse quantization mode of the to-be-decoded block according to the encoding mode, wherein the encoding mode comprises a context model-based encoding mode and a non-context model-based encoding mode.

6. The decoding method of claim 4, wherein parsing the bitstream to obtain the inverse quantization mode flag of the to-be-decoded block comprises:
    parsing the bitstream, and obtaining the inverse quantization mode flag of the to-be-decoded block from one of:
    a sequence level syntax element, an image level syntax element, a slice level syntax element, a coding tree unit (CTU) level syntax element, a coding unit (CU) level syntax element, a transform unit (TU) level syntax element or a sub-TU level syntax element.

**7.** The decoding method of claim 5, wherein determining the inverse quantization mode of the to-be-decoded block according to the type comprises one of the following manners:

determining the inverse quantization mode of the to-be-decoded block as a dependent inverse quantization, in case that the type of the to-be-decoded block is the luma component;
determining the inverse quantization mode of the to-be-decoded block as a non-dependent inverse quantization, in case that the type of the to-be-decoded block is the luma component;
determining the inverse quantization mode of the to-be-decoded block as a non-dependent inverse quantization, in case that the type of the to-be-decoded block is the chroma component;
determining an inverse quantization mode of a sub-TU of the luma component as a dependent inverse quantization, in case that the to-be-decoded block is the sub-TU of the luma component and the sub-TU is a first sub-TU of a transform block (TB) to which the sub-TU belongs;
determining the inverse quantization mode of the sub-TU of the luma component as a non-dependent inverse quantization, in case that the to-be-decoded block is the sub-TU of the luma component and the sub-TU is the first sub-TU of the TB to which the sub-TU belongs; or
determining an inverse quantization mode of a sub-TU of the chroma component as a non-dependent inverse quantization, in case that the to-be-decoded block is the sub-TU of the chroma component and the sub-TU is a first sub-TU of a TB to which the sub-TU belongs.

**8.** The decoding method of claim 5, wherein determining the proportion of non-zero coefficients in the decoded sub-TB, and determining the inverse quantization mode of the to-be-decoded block according to the proportion of non-zero coefficients comprise one of the following manners:

determining a proportion of non-zero coefficients in a first preset number of decoded sub-TBs, and in case that the proportion of non-zero coefficients is greater than a first preset proportion threshold, determining the inverse quantization mode of the to-be-decoded block as a dependent inverse quantization; or
determining a proportion of non-zero coefficients in a second preset number of decoded sub-TBs, and in case that the proportion of non-zero coefficients is less than or equal to a second preset proportion threshold, determining the inverse quantization mode of the to-be-decoded block as a non-dependent inverse quantization.

**9.** The decoding method of claim 5, wherein determining the inverse quantization mode of the to-be-decoded block according to the encoding mode comprises one of the following manners:

determining the inverse quantization mode of the to-be-decoded block as a non-dependent inverse quantization or a dependent inverse quantization, in case that the encoding mode is the context model-based encoding mode; or
determining the inverse quantization mode of the to-be-decoded block as a non-dependent inverse quantization or a dependent inverse quantization, in case that the encoding mode is not the context model-based encoding mode.

**10.** The decoding method of any one of claims 1 to 3, wherein inverse quantization modes of a plurality of sub-TBs belonging to a same transform block (TB) are same or different.

**11.** A video encoding method, comprising:

determining a quantization mode of a to-be-encoded block; and
performing quantization on the to-be-encoded block according to the determined quantization mode.

**12.** The encoding method of claim 11, wherein the to-be-encoded block is a transform block (TB) or a sub-TB.

**13.** The encoding method of claim 11, wherein the quantization mode of the to-be-encoded block is one of a rate distortion optimized quantization (RDOQ) mode or a dependent quantization (DQ) mode.

**14.** The encoding method of claim 11, further comprising:
writing a quantization mode flag indicating the quantization mode of the to-be-encoded block into an encoded bitstream.

**15.** The encoding method of any one of claims 11 to 14, wherein the to-be-encoded block is a transform block (TB) comprising a plurality of sub-TBs,
determining the quantization mode of the to-be-encoded block comprises:

determining quantization modes of the plurality of sub-TBs comprised in the to-be-encoded block respectively, wherein the quantization modes of the plurality of sub-TBs are same or different.

**16.** The encoding method of claim 14, wherein writing the quantization mode flag indicating the quantization mode of the to-be-encoded block into the encoded bitstream comprises:
writing the quantization mode flag into one of the following syntax elements of the encoded bitstream:
a sequence level syntax element, an image level syntax element, a slice level syntax element, a coding tree unit (CTU) level syntax element, a coding unit (CU) level syntax element, a transform unit (TU) level syntax element or a sub-TB level syntax element encoded bitstream.

**17.** The encoding method of any one of claims 11 to 14, wherein determining the quantization mode of the to-be-encoded block comprises one of the following manners:

determining the quantization mode of the to-be-encoded block as a dependent quantization (DQ) mode, in case that a type of the to-be-encoded block is a luma component;
determining the quantization mode of the to-be-encoded block as a rate distortion optimized quantization (RDOQ) mode, in case that the type of the to-be-encoded block is the luma component;
determining the quantization mode of the to-be-encoded block as a RDOQ mode, in case that the type of the to-be-encoded block is a chroma component;
determining a quantization mode of a sub-TB of the luma component as a dependent inverse quantization mode, in case that the to-be-encoded block is the sub-TB of the luma component and the sub-TB is a first sub-TB of a transform block (TB) to which the sub-TB belongs;
determining the quantization mode of the sub-TB of the luma component as a RDOQ mode, in case that the to-be-encoded block is the sub-TB and the sub-TB of the luma component is the first sub-TB of the TB to which the sub-TB belongs; or
determining a quantization mode of a sub-TB of the chroma component as a RDOQ mode, in case that the to-be-encoded block is the sub-TB and the sub-TB of the chroma component is a first sub-TB of a TB to which the sub-TB belongs.

**18.** The encoding method of any one of claims 11 to 14, wherein determining the quantization mode of the to-be-encoded block comprises one of the following manners:

determining a proportion of non-zero coefficients in a first preset number of encoded sub-TBs, and in case that the proportion of non-zero coefficients is greater than a first preset proportion threshold, determining the quantization mode of the to-be-encoded block as a dependent inverse quantization mode; or
determining a proportion of non-zero coefficients in a second preset number of encoded sub-TBs, and in case that the proportion of non-zero coefficients is less than or equal to a second preset proportion threshold, determining the quantization mode of the to-be-encoded block as a rate distortion optimized quantization (RDOQ) mode.

**19.** The encoding method of any one of claims 11 to 14, wherein determining the quantization mode of the to-be-encoded block comprises one of the following manners:

determining a number of sub-TBs comprised in a to-be-encoded transform block (TB), and in case that the number of sub-TBs is greater than or equal to a first number threshold and is less than or equal to a second number threshold, determining the quantization mode of the to-be-encoded block as a dependent quantization (DQ) mode or a rate distortion optimized quantization (RDOQ) mode; or
determining a number of sub-TBs comprised in a to-be-encoded TB, and in case that the number of sub-TBs is less than a third number threshold, determining the quantization mode of the to-be-encoded block as the DQ mode or the RDOQ mode.

**20.** The encoding method of any one of claims 11 to 14, wherein determining the quantization mode of the to-be-encoded block comprises one of the following manners:

determining a quantization mode of the sub-TB as a dependent quantization (DQ) mode or a rate distortion optimized quantization (RDOQ) mode, in case that the to-be-encoded block is a sub-TB, an encoding mode used for a transform block (TB) to which the sub-TB belongs is a context model-based encoding mode, and a number of remaining binarization flags based on the context model-based encoding mode that are available to a to-be-encoded TB to which the sub-TB belongs, is greater than a threshold number of binarization flags; or determining a quantization mode of the sub-TB as the RDOQ mode or the DQ mode, in case that the to-be-encoded block is a sub-TB, an encoding mode used for a TB to which the sub-TB belongs is a context model-based encoding mode, and a number of remaining binarization flags based on the context model-based encoding mode that are available to the to-be-encoded TB to which the sub-TB belongs, is less than or equal to a threshold number of binarization flags.

21. The encoding method of any one of claims 11 to 14, wherein in case that the determined quantization mode is a dependent quantization (DQ) mode, performing quantization on the to-be-encoded block comprises one of the following manners:

in responsive to the to-be-encoded block being a sub-TB, performing DQ on the to-be-encoded block after a first coefficient in the sub-TB is initialized to state 0; or
in responsive to the to-be-encoded block being a sub-TB, in case that a previous encoded sub-TB based on DQ is present in a transform block (TB) to which the sub-TB belongs, performing DQ on the to-be-encoded block after a state of a first coefficient in the sub-TB is determined according to a state and parity of a last coefficient in the previous encoded sub-TB based on DQ; and in case that a previous encoded sub-TB based on DQ is not present in a TB to which the sub-TB belongs, performing DQ on the to-be-encoded block after the first coefficient in the sub-TB is initialized to state 0.

22. A video decoding device, comprising: a processor; and a memory storing a computer program executable by the processor, wherein the processor implements the decoding method of any one of claims 1 to 10 when the processor executes the computer program.

23. A video encoding device, comprising: a processor; and a memory storing a computer program executable by the processor, wherein the processor implements the encoding method of any one of claims 11 to 21 when the processor executes the computer program.

24. A video encoding and decoding system, comprising at least one of the decoding device of claim 22 or the encoding device of claim 23.

25. A non-transitory computer-readable storage medium, having stored a computer program, wherein the computer program implements the method of any one of claims 1 to 21 when the computer program is executed by a processor.

26. A bitstream, generated according to the encoding method of any one of claims 11 to 21, wherein the bitstream comprises a quantization mode flag configured to indicate a mode by which a decoding side performs inverse quantization on a to-be-decoded block.

**FIG. 1**

**FIG. 2**

FIG. 3

FIG. 4

| current state | next state for ... | |
|---|---|---|
| | $(k \& 1) == 0$ | $(k \& 1) == 1$ |
| 0 | 0 | 2 |
| 1 | 2 | 0 |
| 2 | 1 | 3 |
| 3 | 3 | 1 |

**FIG. 5**

EP 4 354 861 A1

**FIG. 6**

FIG. 7

801, determining an inverse quantization
mode of a to-be-decoded block

802, performing coefficient parsing and
inverse quantization on the to-be-decoded
block according to the determined inverse
quantization mode

**FIG. 8**

800, determining
a state of a classification
inverse quantization switch of a
to-be-decoded block

On

801, determining an inverse quantization
mode of a to-be-decoded block

802, performing coefficient parsing and
inverse quantization on the to-be-decoded
block according to the determined inverse
quantization mode

**FIG. 9**

1001, determining a quantization mode of a to-be-coded block

↓

1002, performing quantization on the to-be-coded block according to the determined quantization mode

↓

1003, writing a quantization mode flag indicating the quantization mode of the to-be-coded block into a coded bitstream

**FIG. 10**

```
       ┌──────────────────────────┐
       │   1000, determining      │
       │ whether a condition for  │
       │ classification quantization │
       │ of a to-be-coded block is │
       │          met             │
       └──────────────────────────┘
                   │ Yes
                   ▼
┌────────────────────────────────────────┐
│ 1001, determining a quantization mode of a │
│            to-be-coded block             │
└────────────────────────────────────────┘
                   │
                   ▼
┌────────────────────────────────────────┐
│ 1002, performing quantization on the to-  │
│      be-coded block according to the      │
│      determined quantization mode         │
└────────────────────────────────────────┘
                   │
                   ▼
┌ ─ ─ ─ ─ ─ ─ ─ ─ ─ ─ ─ ─ ─ ─ ─ ─ ─ ─ ─ ┐
│  1003, writing a quantization mode flag  │
│ indicating the quantization mode of the to- │
│   be-coded block into a coded bitstream   │
└ ─ ─ ─ ─ ─ ─ ─ ─ ─ ─ ─ ─ ─ ─ ─ ─ ─ ─ ─ ┘
```

**FIG. 11**

```
┌────────────────────────┐
│                        │
│       Processor        │
│                        │
└────────────────────────┘
            ▲
            │
            ▼
┌────────────────────────┐
│                        │
│        Memory          │
│                        │
└────────────────────────┘
```

**FIG. 12**

## INTERNATIONAL SEARCH REPORT

| International application No. |
| --- |
| **PCT/CN2021/099854** |

**A.    CLASSIFICATION OF SUBJECT MATTER**

H04N 19/126(2014.01)i;  H04N 19/13(2014.01)i;  H04N 19/176(2014.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNPAT, WPI, EPODOC, JVET: 分类量化, 依赖, 非依赖, 独立, 率失真, 量化, 反量化, 标识, 标志, 标记, 旗标, 类型, 色度, 亮度, 编码方式, 非零系数, 变换块, 子变换块; quantization, dependent, rate distortion optimized quantization, DQ, RDOQ, label, flag, lum, chroma, CAVLC, CABAC, nonzero coefficient, TU, sub TU.

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112236999 A (FRAUNHOFER-GESELLSCHAFT ZUR FÖRDERUNG DER ANGEWANDTEN FORSCHUNG E. V.) 15 January 2021 (2021-01-15) description, paragraphs [0041]-[0299] | 1-26 |
| A | CN 112655209 A (FRAUNHOFER-GESELLSCHAFT ZUR FÖRDERUNG DER ANGEWANDTEN FORSCHUNG E. V.) 13 April 2021 (2021-04-13) entire document | 1-26 |
| A | CN 111131819 A (BEIJING BYTEDANCE NETWORK TECHNOLOGY CO., LTD. et al.) 08 May 2020 (2020-05-08) entire document | 1-26 |
| A | US 2019387259 A1 (QUALCOMM INCORPORATED) 19 December 2019 (2019-12-19) entire document | 1-26 |
| A | SCHWARZ, H. et al. "CE7: Summary report on quantization and coefficient coding" *Joint Video Experts Team (JVET) of ITU-T SG 16 WP 3 and ISO/IEC JTC 1/SC 29/WG 11 13th Meeting: Marrakech, MA, 9–18 Jan. 2019*, 18 January 2019 (2019-01-18), entire document | 1-26 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 March 2022** | **09 March 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/099854**

| Patent document cited in search report | | | Publication date (day/month/year) | Patent family member(s) | | | Publication date (day/month/year) |
|---|---|---|---|---|---|---|---|
| CN | 112236999 | A | 15 January 2021 | TW | 202005376 | A | 16 January 2020 |
| | | | | WO | 2019185769 | A1 | 03 October 2019 |
| | | | | KR | 20210003125 | A | 11 January 2021 |
| | | | | EP | 3777153 | A1 | 17 February 2021 |
| | | | | JP | 2021519544 | A | 10 August 2021 |
| | | | | US | 2021084304 | A1 | 18 March 2021 |
| CN | 112655209 | A | 13 April 2021 | EP | 3818703 | A1 | 12 May 2021 |
| | | | | KR | 20210025106 | A | 08 March 2021 |
| | | | | WO | 2020007785 | A1 | 09 January 2020 |
| | | | | US | 2021136385 | A1 | 06 May 2021 |
| | | | | JP | 2021530155 | A | 04 November 2021 |
| | | | | TW | 202007169 | A | 01 February 2020 |
| CN | 111131819 | A | 08 May 2020 | CN | 111131821 | A | 08 May 2020 |
| | | | | WO | 2020089824 | A1 | 07 May 2020 |
| | | | | WO | 2020089825 | A1 | 07 May 2020 |
| US | 2019387259 | A1 | 19 December 2019 | TW | 202002636 | A | 01 January 2020 |
| | | | | CN | 112514386 | A | 16 March 2021 |
| | | | | WO | 2019245692 | A1 | 26 December 2019 |
| | | | | EP | 3808084 | A1 | 21 April 2021 |

Form PCT/ISA/210 (patent family annex) (January 2015)